# FASCICULE DE BREVET EUROPEEN

(11) **EP 0 389 354 B1**
(45) Date de publication et mention de la délivrance du brevet: **26.07.1995**
(21) Numéro de dépôt: 90400745.7
(22) Date de dépôt: 20.03.1990
(51) Int. Cl.: B32B 17/10, C08G 18/75, C08G 18/66, C08G 18/78

(54) **Couche de polyuréthane ayant des propriétés d'absorbeur d'énergie et utilisation dans les vitrages de sécurité**
Energieabsorbierende Eigenschaften aufweisende Polyurethanschicht sowie ihre Verwendung in Verbundsicherheitsscheiben
Polyurethane layer having energy absorbing properties and its use in laminated safety glass

(30) Priorité: 20.03.1989 FR 8903585
(43) Date de publication de la demande: 26.09.1990
(73) Titulaire: SAINT-GOBAIN VITRAGE INTERNATIONAL, 92400 Courbevoie (FR)
(72) Inventeur: Bravet, Jean-Louis, F-60150 Thourotte (FR); Drujon, Sylvie, F-60150 Thourotte (FR)
(74) Mandataire: Muller, René

(56) Documents cités:
- EP-A- 0 019 368
- EP-A- 0 133 090
- BE-A- 856 398
- DE-A- 2 729 226

## Description

L'invention concerne une couche de matière plastique transparente, de haute qualité optique, apte à être utilisée dans les vitrages feuilletés comprenant une feuille de verre et au moins une couche de matière plastique, par exemple des pare-brise de véhicule, la couche de matière plastique présentant des propriétés d'absorbeur d'énergie.

Des couches de matière plastique ayant des propriétés d'absorbeur d'énergie ont déjà été décrites dans la publication de brevet européen EP-0 133 090. Ces couches sont formées dans un processus en continu par coulée réactive, sur un support plan horizontal, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5 Pas à + 40°C, le composant polyol comprenant au moins un polyol long difonctionnel de masse moléculaire comprise entre 500 et 4000 et au moins un diol court en tant qu'agent d'allongement de chaîne. Par coulée réactive on entend la coulée sous forme d'une couche ou d'un film d'un mélange liquide des composants à l'état de monomères ou de prépolymères, suivie d'une polymérisation de ce mélange par la chaleur.

Les proportions des composants du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1.

Les diisocyanates convenables sont choisis notamment parmi les isocyanates difonctionnels aliphatiques suivants: hexaméthylènediisocyanate (HMDI), 2, 2, 4- triméthyl,6,6-hexanediisocyanate (TMDI), bis-4- isocyanatocyclohexyl méthane (Hylène W), bis-3- méthyl - 4 - isocyanatocyclo hexylméthane, 2,2 bis (4-isocyanatocyclohexyl) propane, 3- isocyanatométhyl- 3, 5, 5 triméthylcyclohexylisocyanate (IPDI), m-xylylènediisocyanate (XDI), m et p- tétraméthylxylylènediisocyanate (m- et p- TMXDI), trans-cyclohexane - 1,4 diisocyanate (CHDI), 1,3 - (diisocyanatométhyl) cyclohexane (XDI hydrogéné). L'IPDI et l'IPDI contenant des fonctions urées sont choisis de préférence.

La polymérisation par la chaleur de ces couches préférées à base d'IPDI utilise un cycle thermique consistant généralement en au moins 20 minutes à une température de l'ordre de 120°C. Ce qui implique un long tunnel de polymérisation dans le cas d'une coulée réactive en continu.

On a cherché maintenant, notamment pour des raisons de coût et de longueur de ligne, à réduire la durée de ce cycle de polymérisation.

Dans la fabrication des couches de polyuréthane thermoplastique, un des diisocyanates les plus couramment utilisés et cités dans la littérature par exemple dans la publication de brevet US 3 620 905 est le bis 4-isocyanatocyclohexylméthane commercialisé par exemple sous l'appelation Hylène W® ou Desmodur W®. Une des raisons de cette utilisation est sa grande réactivité. Cependant, des essais effectués par la demanderesse ont montré que son utilisation, dans un procédé de coulée réactive, dans les conditions habituelles de température de coulée, c'est-à-dire de l'ordre de 40°C, pour fabriquer une couche de polyuréthane ayant des propriétés d'absorbeur d'énergie conduisait généralement à une couche présentant un flou et donc non satisfaisante du point de vue qualité optique.

On peut éviter le flou en coulant le mélange réactionnel à une température plus élevée, mais dans ce cas, la polymérisation peut être trop rapide et elle peut se produire prématurément déjà dans la tête de coulée. Il s'ensuit la formation de défauts optiques tels que des stries sur la couche.

On connait aussi de la publication de brevet BE-A-0 856 398 une couche de polyuréthane thermoplastique ayant des propriétés d'adhésion et pouvant notamment être obtenue à partir d'un mélange de deux diisocyanates et de polyols difonctionnels en solution.

L'invention propose une nouvelle couche de polyuréthane ayant des propriétés d'absorbeur d'énergie (désignée par la suite par couche AE) et d'excellente qualité optique, obtenue par coulée réactive et qui en outre peut être polymérisée plus rapidement que les couches connues dans cette technique.

La couche ayant des propriétés d'absorbeur d'énergie selon l'invention est formée par coulée réactive ou pulvérisation réactive, à partir d'un mélange réactionnel d'un composant isocyanate d'une viscosité inférieure à 5 Pas à 40°C et d'un composant polyol comprenant au moins un polyol long difonctionnel choisi parmi les polyétherdiols ou les polyester diols de masse moléculaire comprise entre 500 et 4000, au moins un diol court de masse moléculaire inférieure à 300, et au moins un polyol de fonctionnalité supérieure à 2, le rapport des groupements équivalents isocyanates (NCO) aux groupements équivalents hydroxyles (OH) d'environ égal à 1, le composant isocyanate étant un mélange de 3-isocyanatométhyl-3,5,5-triméthylcyclohexylisocyanate (IPDI) présentant ou non des fonctions urées (I) et de bis-4-isocyanatocyclohexylméthane (II) à raison de 0,1 à 0,8 équivalent isocyanate (I) et de 0,9 à 0,2 équivalent isocyanate (II) pour 1 équivalent isocyanate au total.

Lorsque le mélange d'isocyanates contient plus de 0,9 équivalent de l'isocyanate (II), la couche obtenue est floue. Lorsque le mélange d'isocyanates contient moins de 0,2 équivalent de ce même isocyanate (II), la cinétique de réaction n'est pas améliorée de façon significative.

Le mélange d'isocyanates selon l'invention permet de façon surprenante d'éliminer le flou constaté lors de l'utilisation du seul bis-4-isocyanatocyclohexylméthane (II) même lorsque cet isocyanate est le composant principal du mélange d'isocyanate, tout en améliorant la cinétique de la réaction de polymérisation de la couche AE.

Les mélanges préférés sont formés des deux isocyanates pris dans les proportions suivantes exprimée en équivalents isocyanates, de 0,2 à 0,5, plus préférentiellement 0,3 équivalent apportés par l'isocyanate (I) et de 0,8 à 0,5, plus préférentiellement 0,7 équivalent apportés par l'isocyanate (II), la somme de équivalents apportés par les isocyanates (I) et (II) étant toujours égale à 1 environ pour 1 équivalent hydroxyle.

Outre l'amélioration de la cinétique de polymérisation et la bonne qualité optique de la couche selon l'invention, cette couche présente de bonnes caractéristiques mécaniques et qui peuvent même être meilleures que celles présentées par les couches formées à partir d'isocyanate (I) ou d'isocyanate (II) uniquement. Ces propriétés mécaniques sont notamment la résistance à la rupture et l'allongement, ce qui confère généralement au vitrage qui utilise cette couche une meilleure résistance à la pénétration.

L'isocyanate (I) peut contenir des fonctions urées à raison de 0 à 10 % en poids et de préférence de 5 à 7 % en poids. Les fonctions urées peuvent améliorer certaines propriétés mécaniques de la couche de polyuréthane.

Le composant polyol utilisé pour former la couche selon l'invention comprend un polyol long, un allongeur de chaîne et une faible proportion d'un polyol de fonctionnalité supérieure à 2.

Les polyols longs convenables sont choisis parmi des polyétherdiols ou des polyester diols de masse moléculaire 500 - 4000 ; les polyester diols étant les produits d'estérification d'un diacide tel que l'acide adipique, succinique, palmitique, azelaïque, sébacique, o-phtalique, et d'un diol tel un éthylèneglycol, propanediol -1,3, butanediol -1,4, hexanediol -1,6, les polyétherdiols de formule générale H ⁅ O (CH₂)n ⁆ ₘ OH avec n = 2 à 6 ; m tel que la masse moléculaire soit située dans l'intervalle 500 - 4000 ou les polyétherdiols de formule générale : 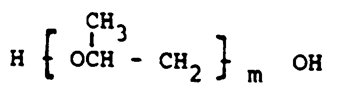
avec m tel que la masse moléculaire soit située également dans l'intervalle 500 - 4000. On peut encore utiliser des polycaprolactone-diols.

On utilise de préférence un polytétraméthylène glycol (n = 4) de masse moléculaire 1000.

Les agents d'allongement de chaînes convenables sont des diols courts de masse moléculaire inférieure à environ 300 et de préférence inférieure à 150, tels que les : éthylèneglycol, propanediol- 1,2, propanediol -1,3, butanediol -1,2, -1,3, - 1,4, diméthyl-2,2 propanediol-1,3 (néopentylglycol), pentanediol -1,5, hexanediol-1,6, octanediol - 1,8, décanediol -1,10, dodécanediol- 1,12, cyclohexanediméthanol, bisphénol A, méthyl- 2 pentanediol-2,4, méthyl-3 pentanediol - 2,4, éthyl- 2 hexanediol- 1,3, triméthyl- 2,2,4- pentenediol- 1,3, diéthylèneglycol, triéthylèneglycol, tétraéthylèneglycol, butyne- 2-diol-1,4, butènediol-1,4 et décynediol substitués et/ou éthérifiés, hydroquinone - bis - hydroxyéthyléther, bisphénol A éthérifiés par deux ou quatre groupes d'oxyde de propylène, acide diméthylolpropionique. On utilise de préférence le butanediol -1,4.

Le polyol de fonctionnalité supérieure à deux peut être choisi parmi des triols aliphatiques monomères tels le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Les proportions entre le polyol long, le diol court, le polyol de fonctionnalité supérieure à 2 peuvent varier selon les propriétés désirées. On choisit généralement des proportions telles que pour un équivalent hydroxyle le polyol long représente environ de 0,30 à 0,40 équivalent, le diol court d'environ 0,2 à 0,7 équivalent et le polyol de fonctionnalité supérieure à 2 environ 0,05 à 0,35 équivalent.

La couche AE selon l'invention est avantageusement utilisée en étant associée avec une couche de recouvrement autocicatrisable, résistant à la rayure et à l'abrasion.

Cette couche de recouvrement autocicatrisable, en matière plastique, que l'on peut encore désigner dans son application selon l'invention, par couche de protection interne (couche PI), est par exemple celle décrite dans les publications de brevets français 2 187 719, 2 251 608 ou 2 574 396. Cette couche autocicatrisable a dans les conditions normales de température, une haute capacité de déformation élastique, un faible module d'élasticité, inférieur à 2000 daN/cm² et de préférence inférieur à 200 daN/cm², et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm² et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6- hexanediisocyanate, le 2, 2, 4-triméthyl 1,6- hexanediisocyanate, le 2,4, 4, triméthyl- 1,6 - hexanediisocyanate, le 1,3- bis (isocyanatométhyl)benzène, le bis (4-isocyanatocyclohexyl) méthane, le bis (3-méthyl-4-isocyanatocyclohexyl) méthane, le 2,2-bis (4-isocyanatocyclohexyl) propane et le 3-isocyanatométhyl- 3,5,5 - triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2 - bis (hydroxyméthyl- 1 - propanol (triméthyloléthane), le 2,2- bis (hydroxyméthyl) - 1- butanol (triméthylolpropane), le 1,2,4- butanetriol, le 1,2,6-hexanetriol, le 2,2-bis (hydroxyméthyl)- 1,3-propanediol (pentaérythritol) et le 1, 2, 3, 4, 5, 6- hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2 - propylène et le tétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent être utilisés. Un Polyuréthane thermodurcissable particulièrement préféré est celui décrit dans la publication de brevet français 2 251 608.

La couche ayant des propriétés d'absorbeur d'énergie peut contenir divers additifs.

Elle peut contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo (2,2,2) - octane, le 1,8 diazabicyclo (5,4,0)- 1 decene - 7.

La couche peut contenir un stabilisant tel le bis (2,2,6,6-tétraméthyl-4 pipéridyl) sébaçate, un antioxydant phénolique.

La couche peut contenir également un agent nappant tel une résine silicone, un ester fluoroalkylé, une résine acrylique.

D'autres avantages et caractéristiques de la couche de polyuréthane AE selon l'invention apparaîtront dans la description suivante d'exemple de fabrication de la couche et des vitrages feuilletés qui l'utilisent.

### EXEMPLE 1

Pour fabriquer la couche ayant des propriétés d'absorbeur d'énergie, on prépare au préalable le composant polyol en mélangeant un polytétraméthylèneglycol de masse moléculaire 1000, du butanediol -1,4 et un polyol de fonctionnalité supérieure à 2, par exemple le produit commercialisé sous l'appellation Desmophen 1140® qui présente une fonctionalité comprise entre 2 et 3, les proportions entre les constituants étant telles que le polytétraméthylèneglycol apporte 0,35 équivalent en groupes hydroxyles, le butanediol - 1,4 en apporte 0,55 et le polyol de fonctionnalité supérieure à 2 en apporte 0,1.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,02 % en poids calculé de la même façon que précédemment.

Le composant isocyanate utilisé est un mélange de 3 -isocyanatométhyl - 3,5,5 -triméthylcyclohexylisocyanate (IPDI) à raison de 0,3 équivalent NCO et de bis - 4 - isocyanatocyclohexylméthane (Desmodur W®) à raison de 0,7 équivalent NCO pour 1 équivalent NCO au total.

Les composants sont pris en quantités telles que le rapport NCO/OH est de 1.

Après dégazage sous vide des composants, le mélange porté à environ 40°C est coulé à l'aide d'une tête de coulée, comme celle décrite dans la publication de brevet français 2 347 170, sur un support en verre mobile défilant de manière continue, revêtu d'un agent de séparation qui peut être par exemple celui décrit dans la publication de brevet français 2 383 000, à savoir un produit d'addition modifié d'éthylène oxyde. On forme ainsi une couche d'environ 0,6 mm d'épaisseur qui est soumise à un cycle de polymérisation consistant en 15 minutes de chauffage à 120°C environ.

La couche est retirée du support. Sa transparence est parfaite.

### EXEMPLE 2

On opère comme dans l'exemple 1, sauf qu'on modifie le rapport des deux isocyanates en prenant 0,1 équivalent d'isocyanate (I) et 0,9 équivalent d'isocyanate (II).

La couche obtenue est transparente.

### EXEMPLE COMPARATIF 1

On opère comme dans l'exemple 1, sauf qu'on utilise uniquement de l'isocyanate I (1 équivalent).

La couche obtenue est transparente. Mais la polymérisation est inachevée.

### EXEMPLE COMPARATIF 2

On opère comme dans l'exemple 1, sauf qu'on utilise uniquement de l'isocyanate II (1 équivalent).

La couche obtenue est très floue. Le flou mesuré d'après la norme européenne R 43 annexe 3, paragraphe 4 est de 52 %.

### EXEMPLE COMPARATIF 3

On opère comme dans l'exemple 1, sauf qu'on utilise un mélange d'isocyanates dans un rapport correspondant à 0,05 équivalent d'isocyanate (I) et 0,95 équivalent d'isocyanate (II).

La couche obtenue est floue. Le flou mesuré est de 12 %.

### EXEMPLE 3

On opère comme dans l'exemple 1, sauf qu'on utilise un mélange d'isocyanates dans un rapport correspondant à 0,8 équivalent d'isocyanate (I) et 0,2 équivalent d'isocyanate (II).

La couche obtenue est transparente.

### EXEMPLE 4

On opère comme dans l'exemple 1, sauf qu'on utilise en tant qu'isocyanate (I) du 3-isocyanatométhyl - 3,5,5 - triméthylcyclohexylisocyanate (IPDI) présentant des fonctions urées obtenues par hydrolyse partielle de l'IPDI et ayant une teneur en groupement NCO d'environ 31,5 % en poids, le nombre d'équivalent étant toujours de 0,3 équivalent NCO et de 0,7 pour l'isocyanate (II).

La couche obtenue est transparente.

### EXEMPLE 5

Avant de couler le mélange réactionnel sur le support de coulée pour former la couche AE, on fabrique au préalable sur ledit support une couche de polyuréthane thermodurcissable à partir d'un mélange homogène ayant les proportions suivantes :
- 1000 g d'un polyéther d'un poids moléculaire d'environ 450 obtenu par condensation d'oxyde de 1,2-propylène avec du 2,2-bis (hydroxyméthyl)- 1- butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexanediisocyanate ayant une teneur en radicaux isocyanates libres d'environ 23,2 %.

On forme une couche uniforme qui après polymérisation présente une épaisseur d'environ 0,3 mm. Sur cette première couche, on coule le mélange réactionnel apte à former la couche AE comme décrit dans l'exemple 1.

### EXEMPLES 6 A 8

On fabrique tout d'abord une couche de polyuréthane thermodurcissable comme décrit dans l'exemple 5, sur laquelle on coule des mélanges réactionnels comme décrits respectivement dans les exemples 2, 3 et 4.

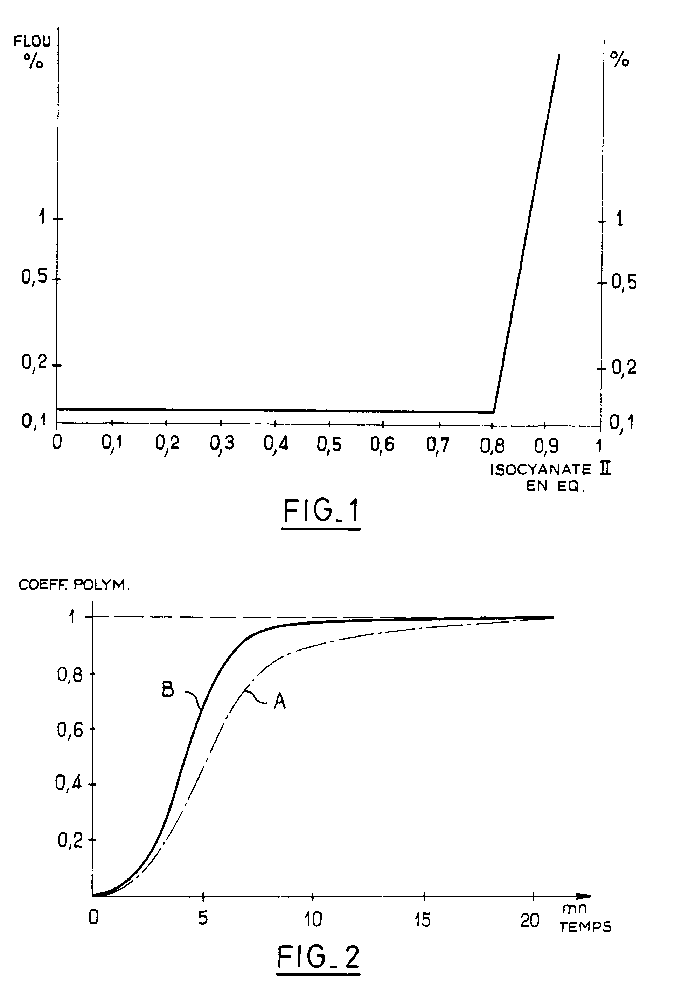

Des mesures de flou selon la norme européenne R 43 ont été réalisées pour différentes couches fabriquées avec des proportions différentes des deux isocyanates. Ces mesures sont portées sur la figure 1. Cette figure montre que le flou exprimé en % augmente fortement à partir de 0,8 équivalent d'isocyanate II et qu'au delà de 0,9 équivalent le flou est trop important pour une utilisation de la couche dans les vitrages feuilletés.

Pour mettre en évidence la réactivité du mélange d'isocyanate selon l'invention par rapport au seul isocyanate (I), on a représenté sur la figure 2, la courbe du coefficient d'avancement de la réaction de polymérisation de la couche de polyuréthane en fonction du temps de réaction exprimé en minutes sur la ligne de coulée. Le coefficient 1 correspond à la polymérisation complète de la couche. On remarque la croissance plus rapide de la courbe B correspond au mélange isocyanate (I) (0,3 équivalent) et isocyanate (II) (0,7 équivalent) que celle de la courbe A correspond au seul isocyanate I (1 équivalent), ce qui se traduit par une polymérisation plus rapide.

Les couches AE selon l'invention sont utilisées, comme décrit ci-dessus, de préférence en étant associées avec une couche résistant à la rayure et à l'abrasion en polyuréthane thermodurcissable, sous forme d'une feuille à deux couches qui peut être assemblée avec une feuille de verre pour former le vitrage feuilleté de sécurité.

## Revendications

1. Couche de haute qualité optique, ayant des propriétés d'absorbeur d'énergie (AE), à base d'un polyuréthane, obtenue par coulée réactive ou pulvérisation réactive d'un mélange réactionnel d'un composant isocyanate d'une viscosité inférieure à 5 Pas à + 40°C et d'un composant polyol comprenant au moins un polyol long difonctionnel choisi parmi les polyétherdiols ou les polyester diols de masse moléculaire comprise entre 500 et 4000, au moins un diol court de masse moléculaire inférieure à 300, et au moins un polyol de fonctionnalité supérieure à 2, le rapport des groupements équivalents isocyanates NCO aux groupements équivalents hydroxyles OH étant environ égal à 1, caractérisé en ce que le composant isocyanate est formé d'un mélange de 3-isocyanatométhyl-3,5,5,triméthylcyclohexylisocyanate présentant ou non des fonctions urée (isocyanate I) et de bis-4-isocyanatocyclohexylméthane (isocyanate II), à raison de 0,1 à 0,8 équivalent NCO d'isocyanate (I) et de 0,9 à 0,2 équivalent NCO d'isocyanate (II) pour 1 équivalent NCO au total.

2. Couche selon la revendication 1, caractérisée en ce que le mélange d'isocyanate est choisi de façon que l'isocyanate (I) apporte de 0,2 à 0,5 équivalent NCO et l'isocyanate (II) apporte de 0,8 à 0,5 équivalent NCO pour l'équivalent au total.

3. Couche selon une des revendications 1 ou 2, caractérisée en ce que l'isocyanate (I) est pris à raison de 0,3 équivalent NCO et l'isocyanate (II) est pris à raison de 0,7 équivalent NCO, le composant polyol étant formé de polytétraméthylèneglycol (polyol long difonctionnel) de masse moléculaire d'environ 1000 à raison de 0,30 à 0,40 équivalent hydroxyle, de butanediol-1,4 à raison de 0,2 à 0,7 équivalent hydroxyle et de polyol de fonctionnalité supérieure à 2, de 0,05 à 0,35 équivalent hydroxyle.

4. Couche selon la revendication 3, caractérisée en ce que le polyol de fonctionnalité supérieure à 2 présente une fonctionnalité entre 2 et 3.

5. Feuille de matière plastique de haute qualité optique caractérisée en ce qu'elle comprend une couche de polyuréthane AE selon les revendications 1 à 4 et une couche de polyuréthane thermodurcissable ayant des propriétés de résistance à la rayure et à l'abrasion.

6. Vitrage feuilleté de sécurité, caractérisé en ce qu'il comprend une feuille de verre et une feuille de matière plastique selon la revendication 5.

## Claims

1. Film of high optical quality, having energy-absorber (EA) properties, based upon a polyurethane, obtained by reactive casting or reactive sputtering, of a reaction mixture of an isocyanate component having a viscosity less than 5 Pas at +40°C and of a polyol component comprising at least one difunctional long polyol chosen from among the polyether diols or the polyester diols having a molecular weight of 500 to 4,000, at least one short diol having a molecular weight less than 300, and at least one polyol having a functionality exceeding 2, the ratio of the NCO isocyanate equivalent groups to the OH hydroxyl equivalent groups being approximately equal to 1, characterized in that the isocyanate component is formed of a mixture of 3-isocyanatomethyl - 3,5,5, trimethylcyclohexyl isocyanate having or not having urea functions (isocyanate I) and of bis 4-isocyanatocyclohexyl methane (isocyanate II), in a ratio of 0.1 to 0.8 NCO equivalent of isocyanate (I) and of 0.9 to 0.2 NCO equivalent of isocyanate (II) for 1 NCO equivalent in total.

2. Film according to Claim 1, characterized in that the isocyanate mixture is chosen in such a manner that isocyanate (I) supplies from 0.2 to 0.5 NCO equivalent and isocyanate (II) supplies from 0.8 to 0.5 NCO equivalent for 1 equivalent in total.

3. Film according to one of Claims 1 or 2, characterized in that isocyanate (I) is taken in a ratio of 0.3 NCO equivalent and isocyanate (II) is taken in a ratio of 0.7 NCO equivalent, the polyol component being formed from polytetramethylene glycol (difunctional long polyol) having a molecular weight of approximately 1,000 in a ratio of 0.30 to 0.40 hydroxyl equivalent, of butanediol- 1,4 in a ratio of 0.2 to 0.7 hydroxyl equivalent and of polyol having a functionality exceeding 2 of 0.05 to 0.35 hydroxyl equivalent.

4. Film according to Claim 3, characterized in that the polyol having a functionality exceeding 2 has a functionality of between 2 and 3.

5. Sheet of plastics material of high optical quality, characterized in that it comprises a film of EA polyurethane according to Claims 1 to 4 and a film of thermosetting polyurethane having scratch-resistant and abrasion-resistant properties.

6. Laminated safety pane, characterized in that it comprises a sheet of glass and a sheet of plastics material according to Claim 5.

## Patentansprüche

1. Schicht mit hoher optischer Qualität und energieabsorbierenden (AE) Eigenschaften auf der Grundlage eines Polyurethans, hergestellt durch Reaktionsgießen oder -spritzen eines Reaktionsgemischs aus einer Isocyanatkomponente mit einer Viskosität von unter 5 Pa·s bei + 40 °C und einer Polyolkomponente, die wenigstens ein langes bifunktionelles Polyol mit einer Molmasse von 500 bis 4000, ausgewählt aus den Polyetherdiolen oder Polyesterdiolen, wenigstens ein kurzes Diol mit einer Molmasse von unter 300 und wenigstens ein Polyol mit einer Funktionalität größer als 2 enthält, wobei das Verhältnis der Isocyanat(NCO)gruppen-Äquivalente zu den Hydroxyl(OH)gruppen-Äquivalenten etwa 1 beträgt, **dadurch gekennzeichnet,** **daß** die Isocyanatkomponente aus einem Gemisch aus gegebenenfalls funktionelle Harnstoffgruppen enthaltendem 3-Isocyanatomethyl-3,5,5-trimethylcyclohexylisocyanat (Isocyanat I) und Bis(4-isocyanatocyclohexyl)methan (Isocyanat II) mit einem Anteil von 0,1 bis 0,8 NCO-Äquivalenten des Isocyanats (I) und 0,9 bis 0,2 NCO-Äquivalenten des Isocyanats (II) pro 1 Gesamt-NCO-Äquivalent gebildet ist.

2. Schicht nach Anspruch 1**, dadurch gekennzeichnet, daß** das Isocyanatgemisch derart ausgewählt ist, daß das Isocyanat (I) 0,2 bis 0,5 NCO-Äquivalente und das Isocyanat (II) 0,8 bis 0,5 NCO-Äquivalente zum Gesamtäquivalent beiträgt.

3. Schicht nach Anspruch 1 oder 2, **dadurch gekennzeichnet, daß** das Isocyanat (I) in einem Anteil von 0,3 NCO-Äquivalenten und das Isocyanat (II) in einem Anteil von 0,7 NCO-Äquivalenten eingesetzt wird und die Polyolkomponente aus Polytetramethylenglykol (langem bifunktionellem Polyol) mit einer Molmasse von etwa 1000 in einem Anteil von 0,30 bis 0,40 Hydroxyläquivalenten, 1,4-Butandiol in einem Anteil von 0,2 bis 0,7 Hydroxyläquivalenten und Polyol mit einer Funktionalität von größer als 2 in einem Anteil von 0,05 bis 0,35 Hydroxyläquivalenten gebildet ist.

4. Schicht nach Anspruch 3**, dadurch gekennzeichnet, daß** das Polyol mit einer Funktionalität von größer als 2 eine Funktionalität zwischen 2 und 3 aufweist.

5. Kunststoffolie mit hoher optischer Qualität, **dadurch gekennzeichnet, daß** sie eine AE Polyurethanschicht nach den Ansprüchen 1 bis 4 und eine duroplastische Polyurethanschicht mit kratzfesten und abriebbeständigen Eigenschaften umfaßt.

6. Sicherheitsverbundverglasung, **dadurch gekennzeichnet, daß** sie eine Glasscheibe und eine Kunststoffolie nach Anspruch 5 umfaßt.
